# EUROPEAN PATENT SPECIFICATION

(11) **EP 2 841 247 B1**
(45) Date of publication and mention of the grant of the patent: **28.03.2018**
(21) Application number: 13719395.9
(22) Date of filing: 23.04.2013
(51) Int. Cl.: B29C 45/14, H01H 33/662, H01H 33/66

(54) **POLE PART FOR MEDIUM VOLTAGE USE, AND METHOD FOR MANUFACTURE THE SAME**
MITTELSPANNUNGSPOLTEIL UND VERFAHREN ZUR HERSTELLUNG DAVON
ÉLÉMENT DE PÔLE POUR UTILISATION À MOYENNE TENSION ET PROCÉDÉ DE FABRICATION DE CELUI-CI

(30) Priority: 23.04.2012 EP 12002834
(43) Date of publication of application: 04.03.2015
(73) Proprietor: ABB Schweiz AG, 5400 Baden (CH)
(72) Inventor: KLASKA, Arne, 40235 Düsseldorf (DE); GENTSCH, Dietmar, 40882 Ratingen (DE); ENGELKE, Robin, 40237 Düsseldorf (DE); BAIER, Wilfried, 40885 Ratingen (DE)
(74) Representative: Schmidt, Karl Michael
(86) International application number: PCT/EP2013/001211
(87) International publication number: WO 2013/159906

(56) References cited:
- EP-A1- 2 034 502
- US-A1- 2008 053 810

## Description

The invention relates to a pole part for medium voltage use, with an insulating coverage made of duroplastic or thermoplastic material, and method for manufacture the same, according to the preamble of claims 1 and 4.

Insulating coverages for pole parts are using moulding technology.
For the use of duroplastic coverage, manufactured for example as expoxy resin, as well as for the use of thermoplastic coverage, manufactured by injection moulding, the use of sealings between inlays (e.g. contact terminals) and mould in order to avoid overspraying or leakage of the mould, especially during injection moulding process is needed.
Usually separate sealing elements like o-rings etc are used for example for low pressure injection during the moulding process.
In case of no separate sealing elements are used, line contact (1-dimensional) sealing by metallic sealing, high pressure injection, is used e.g. on rounded, circular edges on the contact terminal and sharp, circular edge at the mould.
The EP 2 034 502 A1 discloses a pole part with a transition area according to the preamble of claim 1. This causes problem by removal of the pole part out of the mould after moulding process.
The technical problem in these known state of the art methods is, that for example in high pressure injection, the mould cuts into the inlay which is for example a contact terminal of the pole part. In consequence of that, the release of the pole part from mould after moulding process could be problematic due to wedge function of the cutting of the sealing edge into the rounding of the inlay.

A further problem ist, that the sealing function depends on quality of rounding and requires quite narrow tolerances of the terminal in the sealing area, especially of rounding, which is difficult to measure it could be a reason for quality issues.
The positioning of inlays strongly depends on contact between mould/additive part and the inlay, for example the contact terminal of a medium voltage pole part. Because of this, the parallel alignment of specific surfaces is difficult.

So the invention relates to a pole part for medium voltage use according to claim 1. The placement of sealings in the mould for the resin or injection process will become much more effective, because no steps or edges or rounded areas occur in the area on which the sealing comes into contact with the moulded pole part. So each form of leakage which produces edges or ridges are avoided, so that the ready moulded pole part can easier be released out of the mould.
So the benefits of the invention are simplification of manufacture and consequently cost reduction, as well as it generates safer production due to planar sealing and avoidance of aforesaid cutting edges. According to the invention, in the aforesaid defined flat transition area, negative or positive topographic structures are implemented into the mould and/or into the contact part as a groove or a topographic ring, in such, that the topographic structure creates under mechanical impact force during mounting the parts into the mould a complementary structure in the opposite part, so that the both corresponding topographies are creating a tight sealing effect during moulding process.

Also new additional construction of sealing areas and alignment surface at contact terminals for thermoplastic pole parts in medium voltage application are possible, which supports a high variety of pole part design.
A further embodiment is given by that the transition areas are located between the contact terminal of the pole part and the ending edge of the insulating coverage of the pole part.
Furthermore is advantageous if the transition area between an inlay of the pole part and the mould are commonly flat in such a way, that rounded edges and/or steps are avoided. The invention also relates to a method for the manufacture of a pole part for medium voltage use according to claim 4. A further embodiment of this method is given by that the transition areas and the sealings are located between the contact terminal of the pole part and the ending edge of the insulating coverage of the pole part in that way, that no cutting edge occurs.
Also for the method it is an advantageous embodiment that the transition area between an inlay of the pole part and the mould are commonly flat in such a way, that rounded edges and/or steps are avoided.
Figure 1 shows an embodiment of the invention.
Figure 2 shows in comparison the state of the art.
Figur 3 shows a detail of figure 1.

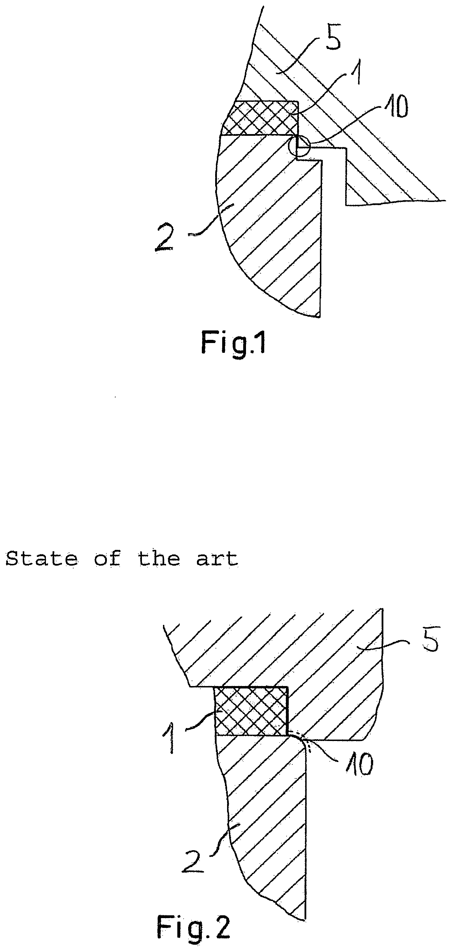

Figure 1 shows the area according to the invention, in which the sealing area 10 is between a plastic part 1 and a contact part 2 of an electric terminal of a pole part. The area in which the sealing during the moulding will be located is flat. That means that between the material transition from the plastic part 1 and the contact terminial part 2 is without any step or grave, it is flat, so that no cutting edge will occur during the moulding. Position number 5 shows a part of the mould. The contact part 2 here is an inlay.

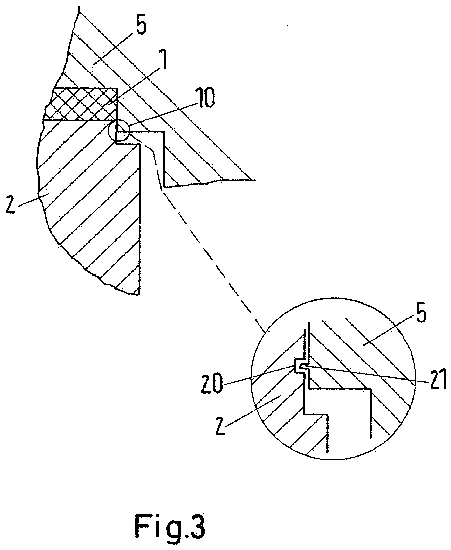

So in figure 3 is shown a further advantageous embodiment, that in the flat area 10 there is localised a topographic structure 21 into the mould made of steel, which cuts into the contact part 2 when the contact part 2 is introduced into the mould 5.
This will produce a groove 20 into the for example aluminium contact part 2 in the area of 10 , so that the topographic ring 21 of the mould 5 corresponds tightly as a sealing with the spontaneous so cut groove in the contact part.
In the flat area 10 can be arranged also some groove 20 in parallel, and with that corresponding parallel topographies 21 in the mould.
In contrast to that, figure 2 shows the state of the art. It is seen that the transition area between the plastic part and the contact part causes a prominent edge, so that a sealing in that area can not be optimal, and during the moulding cutting edge will occur, so that the ready pole part can not easily be put out of the mould.
So the invention results in a list of advantages:
- An additional sealing area (integrated sealing area) is easily given by the constructive solution.
- A planar sealing, th.m. a 2-dimensional sealing area is created without any third dimension steps etc.
- The resulting advantageous sealing for injection moulding is given for thermoplastic and similar materials.
- Also a metallic sealing without additional sealing elements is possible, if the sealing area is created in the described way.
- A secure sealing for high pressure injection is possible.
- The sealing function is independent from outlines of inlay. That results in complex possible outline.
- An easy alignment of the inlay regarding position in the mould is given, since it just depends on easily to check dimensions and position tolerance of the sealing area.

## Claims

1. Pole part for medium voltage use, with an insulating coverage made of duroplastic or thermoplastic material, wherein transitions between different materials and topographic structures of implemented vacuum interrupter and/or connecting terminals are covered tightly by the commonly moulded insulating coverage, wherein a transition area is a sealing area (10) between a plastic part (1) and a contact part (2) of an electrical terminal of the pole part, the transition area being commonly flat in such a way, that the material between the plastic part (1) and the contact terminal part (2) is without any step or grave, so that rounded edges and/or steps are avoided, and no cutting edge will occur during moulding, **characterized in that**, in the aforesaid defined flat transition area, negative or positive topographic structures are implemented into the mould and/or into the contact part as a groove or a topographic ring, in such, that the topographic structure creates under mechanical impact force during mounting the parts into the mould a complementary structure in the opposite part, so that the both corresponding topographies are creating a tight sealing effect during moulding process.

2. Pole part for medium voltage use, according to claim 1,
**characterized in,**
**that** the area between an inlay of the pole part and the mould are commonly flat in such a way, that rounded edges and/or steps are avoided.

3. Pole part according to claim 1 or 2 or 3,
**characterized in**
**that** the aforesaid areas are located between the contact terminal of the pole part and the ending edge of the insulating coverage of the pole part.

4. Method for manufacture a pole part for medium voltage use according to any of claims 1-3, with an insulating coverage made of duroplastic or thermoplastic material, wherein transitions between different materials and topographic structures of implemented vacuum interrupter and/or connecting terminals are covered tightly by the commonly moulded insulating coverage, wherein the transition area between different elements of the pole part is a sealing area (10) between a plastic part (1) and a contact part (2) of an electrical terminal of the pole part, the transition area being commonly flat or laying in a common plane or plane area in such a way, that before moulding e.g. injection of the duroplastic or thermoplastic material, the there created sealings are positioned in a commonly flat area, so that rounded edges and/or steps are avoided, in order to avoid the occurrence of cutting edges in that area.

5. Method for manufacture a pole part for medium voltage use, with an insulating coverage made of duroplastic or thermoplastic material, wherein transitions between different materials and topographic structures of implemented vacuum interrupter and/or connecting terminals are covered tightly by the commonly moulded insulating coverage, particularly according to claim 4,
**characterized in**
**that** the area between inlays of the pole part and the mould are commonly flat or laying in a common plane or plane area in such a way, that before moulding e.g. injection of the duroplastic or thermoplastic material, the there created sealings are positioned in a commonly flat area, so that rounded edges and/or steps are avoided, in order to avoid the occurance of cutting edges in that area.

6. Method according to claim 4 or 5,
**characterized in**
**that** the areas and the sealings are located between the contact terminal of the pole part and the ending edge of the insulating coverage of the pole part in that way, in order to avoid the occurance of cutting edges in that aforesaid transition area or areas.

## Patentansprüche

1. Polteil für den Mittelspannungseinsatz mit einer Isolierabdeckung aus duroplastischem oder thermoplastischem Material, wobei Übergänge zwischen verschiedenen Materialien und topographischen Strukturen von implementierten Vakuumschalter- und/oder Anschlussklemmen dicht durch die herkömmlich geformte Isolierabdeckung abgedeckt sind, wobei ein Übergangsbereich ein Dichtbereich (10) zwischen einem Kunststoffteil (1) und einem Kontaktteil (2) einer elektrischen Klemme des Polteils ist, wobei der Übergangsbereich im Wesentlichen so flach ist, dass das Material zwischen dem Kunststoffteil (1) und dem Anschlussklemmenteil (2) frei von Absätzen oder Gräben ist, so dass abgerundete Kanten und/oder Absätze vermieden werden, und keine scharfen Kanten beim Formen auftreten, **dadurch gekennzeichnet, dass** im definierten flachen Übergangsbereich negative oder positive topographische Strukturen in die Form und/oder in den Kontaktteil als eine Nut oder ein topographischer Ring implementiert sind, so dass die topographische Struktur unter mechanischer Einwirkungskraft während der Montage der Teile in der Form eine ergänzende Struktur im gegenüberliegenden Teil erzeugt, so dass die beiden entsprechenden Topographien eine absolute Dichtwirkung während des Formprozesses erzeugen.

2. Polteil für den Mittelspannungseinsatz nach Anspruch 1, **dadurch gekennzeichnet, dass** der Bereich zwischen einem Einsatz des Polteils und der Form im Wesentlichen so flach ist, dass abgerundete Kanten und/oder Absätze vermieden werden.

3. Polteil nach Anspruch 1, 2 oder 3, **dadurch gekennzeichnet, dass** die vorhergehenden Bereiche zwischen der Kontaktklemme des Polteils und der Endkante der Isolierabdeckung des Polteils angeordnet sind.

4. Verfahren zum Herstellen eines Polteils für den Mittelspannungseinsatz nach Anspruch 1-3 mit einer Isolierabdeckung aus duroplastischem oder thermoplastischem Material, wobei Übergänge zwischen verschiedenen Materialien und topographischen Strukturen von implementierten Vakuumschalter- und/oder Anschlussklemmen dicht durch die herkömmlich geformte Isolierabdeckung abgedeckt sind, wobei der Übergangsbereich zwischen verschiedenen Elementen des Polteils ein Dichtbereich (10) zwischen einem Kunststoffteil (1) und einem Kontaktteil (2) einer elektrischen Klemme des Polteils ist, wobei der Übergangsbereich im Wesentlichen flach ist oder auf einer gemeinsamen Ebene oder planen Ebene so liegt, dass vor dem Formen, beispielsweise Spritzgießen des duroplastischen oder thermoplastischen Materials, die dort erzeugten Abdichtungen in einem im Wesentlichen flachen Bereich angeordnet sind, so dass abgerundete Kanten und/oder Absätze vermieden werden, um das Auftreten von scharfen Kanten in diesem Bereich zu vermeiden.

5. Verfahren zum Herstellen eines Polteils für den Mittelspannungseinsatz mit einer Isolierabdeckung aus duroplastischem oder thermoplastischem Material, wobei Übergänge zwischen verschiedenen Materialien und topographischen Strukturen von implementiertem Vakuumschalter und/oder Anschlussklemmen dicht durch die herkömmlich geformte Isolierabdeckung insbesondere nach Anspruch 4 abgedeckt sind, **dadurch gekennzeichnet, dass** der Bereich zwischen Einsätzen des Polteils und der Form im Wesentlichen flach ist oder auf einer gemeinsamen Ebene oder planen Ebene so liegt, dass vor dem Formen, beispielsweise Spritzgießen des duroplastischen oder thermoplastischen Materials, die dort erzeugten Abdichtungen in einem im Wesentlichen flachen Bereich angeordnet sind, so dass abgerundete Kanten und/oder Absätze vermieden werden, um das Auftreten von scharfen Kanten in diesem Bereich zu vermeiden.

6. Verfahren nach Anspruch 4 oder 5, **dadurch gekennzeichnet, dass** die Bereiche und die Abdichtungen zwischen der Kontaktklemme des Polteils und der Endkante der Isolierabdeckung des Polteils so angeordnet sind, dass das Auftreten von scharfen Kanten in diesem Bereich oder diesen Bereichen vermieden wird.

## Revendications

1. Partie de pôle pour une utilisation de tension moyenne, avec une couverture isolante réalisée en matériau plastique thermodurcissable ou thermoplastique, dans laquelle des transitions entre des matériaux différents et des structures topographiques d'un interrupteur à vide implémenté et/ou de bornes de connexion sont couvertes étroitement par la couverture isolante généralement moulée,
dans laquelle une zone de transition est une zone d'étanchéité (10) entre une partie en plastique (1) et une partie de contact (2) d'une borne électrique de la partie de pôle, la zone de transition étant généralement plate de manière à ce que le matériau entre la partie en plastique (1) et la partie de borne de contact (2) soit dépourvu de décrochement ou de cavité, si bien que des bords arrondis et/ou des décrochements sont évités, et aucun bord tranchant ne surviendra pendant le moulage, **caractérisée en ce que**, dans ladite zone de transition plate définie ci-dessus, des structures topographiques négatives ou positives sont implémentées dans le moule et/ou dans la partie de contact en tant que rainure ou anneau topographique, de manière à ce que la structure topographique crée sous une force d'impact mécanique pendant le montage des parties dans le moule une structure complémentaire dans la partie opposée, si bien que les deux topographies correspondantes créent un effet d'étanchéité étroit pendant le processus de moulage.

2. Partie de pôle pour une utilisation de tension moyenne, selon la revendication 1,
**caractérisée en ce que**,
la zone entre une incrustation de la partie de pôle et le moule est généralement plate de manière à ce que des bords arrondis et/ou des décrochements soient évités.

3. Partie de pôle selon la revendication 1 ou 2 ou 3,
**caractérisée en ce que**
les zones mentionnées ci-dessus sont situées entre la borne de contact de la partie de pôle et le bord final de la couverture isolante de la partie de pôle.

4. Procédé de fabrication d'une partie de pôle pour une utilisation de tension moyenne selon l'une quelconque des revendications 1 à 3, avec une couverture isolante réalisée en matériau plastique thermodurcissable ou thermoplastique, dans lequel des transitions entre des matériaux différents et des structures topographiques d'un interrupteur à vide implémenté et/ou de bornes de connexion sont couvertes étroitement par la couverture isolante généralement moulée,
dans lequel la zone de transition entre des éléments différents de la partie de pôle est une zone d'étanchéité (10) entre une partie en plastique (1) et une partie de contact (2) d'une borne électrique de la partie de pôle, la zone de transition étant généralement plate ou se trouvant dans un plan commun ou une zone de plan commune de manière à ce que, avant le moulage, par exemple l'injection du matériau plastique thermodurcissable ou thermoplastique, les étanchéités ainsi créées soient positionnées dans une zone généralement plate, si bien que des bords arrondis et/ou des décrochements sont évités, afin d'éviter la survenue de bords coupants dans cette zone.

5. Procédé de fabrication d'une partie de pôle pour une utilisation de tension moyenne, avec une couverture isolante réalisée en matériau plastique thermodurcissable ou thermoplastique, dans lequel des transitions entre des matériaux différents et des structures topographiques d'un interrupteur à vide implémenté et/ou de bornes de connexion sont couvertes étroitement par la couverture isolante généralement moulée, notamment selon la revendication 4,
**caractérisé en ce que**
la zone entre des incrustations de la partie de pôle et le moule est généralement plate ou se trouve dans un plan commun ou une zone de plan commune, de manière à ce que, avant le moulage, par exemple l'injection du matériau plastique thermodurcissable ou thermoplastique, les étanchéités ainsi créées soient positionnées dans une zone généralement plate, si bien que des bords arrondis et/ou des décrochements sont évités, afin d'éviter la survenue de bords tranchants dans cette zone.

6. Procédé selon la revendication 4 ou 5,
**caractérisé en ce que**
les zones et les étanchéités sont situées entre la borne de contact de la partie de pôle et le bord final de la couverture isolante de la partie de pôle de cette manière, afin d'éviter la survenue de bords tranchants dans cette zone ou ces zones de transition mentionnées ci-dessus.
